# EUROPEAN PATENT APPLICATION

(11) **EP 4 446 384 A1**
(43) Date of publication of application: **16.10.2024**
(21) Application number: 24169399.3
(22) Date of filing: 10.04.2024
(51) Int. Cl.: C08L 97/00, C08L 95/00

(54) **2G BIOETHANOL INDUSTRY WASTE MODIFIED BITUMEN COMPOSITIONS AND PROCESS OF PRODUCTION THEREOF**

(30) Priority: 12.04.2023 IN 202321027134
(71) Applicant: Indian Oil Corporation Limited, 400 051 Mumbai Bandra (East) (IN); Department Of Biotechnology Ministry Of Science & Technology, New Delhi - 110 003 (IN)
(72) Inventor: Satlewal, Alok, 121007 Haryana (IN); Kumar, Ravindra, 121007 Haryana (IN); Mohanta, Chandra Shekhar, 121007 Haryana (IN); Gupta, Ravi Prakash, 121007 Haryana (IN); Devotta, Irudayaraj, 121007 Haryana (IN); Ramakumar, Sankara Sri Venkata, 121007 Haryana (IN)
(74) Representative: Turner, Craig Robert

(57) **Abstract**

The present invention relates to a 2G-bioethanol industry waste modified bitumen composition comprising bitumen or asphalt binder or a petroleum vacuum residue, 2G-bioethanol industry waste lignin, an elasticity modifying agent, and a reactive component. The 2G-bioethanol industry waste modified bitumen composition is storage stable and having different applications like road pavement, roofing, adhesive, waterproofing etc. The present invention also provides a process of preparation of 2G-bioethanol industry waste modified bitumen composition comprising reactive component(s), elasticity modifying agent(s) and 2G bioethanol industry waste lignin.

## Description

### FIELD OF THE INVETNION

The present invention relates to a 2G-bioethanol industry waste modified bitumen composition comprising bitumen or asphalt binder or a petroleum vacuum residue, 2G-bioethanol industry waste lignin, an elasticity modifying agent, and a reactive component. The 2G-bioethanol industry waste modified bitumen composition is storage stable and having different applications like road pavement, roofing, adhesive, waterproofing etc. The present invention also provides a process for preparation of 2G-bioethanol industry waste modified bitumen composition comprising reactive component(s), elasticity modifying agent(s) and 2G bioethanol industry waste lignin.

### BACKGROUND TO THE INVENTION

Bitumen is a black viscous mixture of hydrocarbons obtained naturally or as a residue from petroleum distillation. It is mainly used for road construction and roofing. It is the oldest engineering material and was existed in natural around the world and was used for construction and waterproofing long before refining was even invented. For instance, the first known uses of bitumen were located in Mesopotamia. In these ancient times, bitumen was taken directly from natural fields or lakes. All ancient civilizations used natural bitumen for various applications like, adhesives and waterproofing. The first use of bitumen as a construction material for road pavement appeared in Europe in the 1830s, simultaneously in France and England. Bitumen became then widely used for pavement and roofs. This technology was later introduced in the United States in the 1870s. Since then, the world consumption of bitumen has increased rapidly, most of it being used in road construction.

The world consumption of bitumen was estimated to be approximately 102 million tons per year from which around 85% were used in asphalt for the construction of various kinds of pavements, such as roads or other paved areas. Typically, the term "asphalt" contains approximately 5% by mass of bitumen, with the remaining 95% usually comprising a mixture of mineral aggregates and much finer materials such as lime stone filler, as well as further components. But in America bitumen is called asphalt or asphalt cement and rest others in world, asphalt has a different meaning. It relates to the asphalt mixture combining with bitumen with stone aggregates and is used as a paving material. Around 10% of global bitumen production is used in roofing applications, such as asphalt roofing and fiber reinforced membranes in roofing felt and the remaining 5% is used mainly for sealing and insulating purposes in a variety of building materials, such as water proofing material, pipe coatings, carpet backing, joint sealants, adhesive and paint.

On a chemical point of view, bitumen is a blend of heavy hydrocarbons. These molecules can be separated into two fractions i.e. maltenes and asphaltenes. Maltenes is an oily brown like liquid, having mixture of saturates, aromatics and resins. Asphaltenes is a black solid composed of condensed polyaromatic molecules, including some metals like nitrogen and sulfur. Bitumen is often defined as a suspension of asphaltenes into a maltenes matrix. It is a combination of complex hydrocarbon with unique mechanical properties like adhesion, cohesion and durability which making bitumen the perfect binder for pavement materials. Bitumen is a solid at ambient temperature and softens when heated, turning gradually into a viscous liquid. It is non-volatile at ambient temperature and atmospheric pressure. It is generally black or dark brown with waterproofing and adhesive properties. The chemistry of bitumen is very complex. The properties of bitumen depend upon the crude oil sources and the refinery processes. By selecting appropriate crude oil or proper refinery processes, desired bitumen properties can be obtained. However, there are other limits to the properties of bitumen, e.g. resistance to rutting and cracking of road surfaces, depends upon weather and climatic conditions etc. In order to obtain bitumen with enhanced quality, an increasing number of investigations also began to focus on bitumen modification.

There are different modifiers or additives have been used to improve the performance of bitumen including polymers, chemical modifiers, extenders, oxidants/antioxidants and anti-stripping additives. Moreover, polymer modified bitumen (PMB) i.e. bitumen comprising elastomers, plastomers, rubber, recycled tire rubbers, viscosity modifiers or reactive polymers have become increasingly popular as a replacement for neat bitumen due to their improved properties. Polymer modified bitumen (PMB) is produced by the mechanical mixing or chemical reactions of a bitumen and one or more polymer with different percentages to the weight of bitumen. Several types of polymers or modifiers have been used for bitumen modification like Styrene-butadiene-styrene elastomer SBS, Styrene-isoprene-styrene SIS, Styrene-ethylene-butadiene-styrene SEBS, Natural rubber NR, Ethylene-vinyl acetate EVA, Ethylene-methyl acrylate EMA, Ethylene-butyl acrylate EBA, Atactic polypropylene APP, Polyethylene PE, Polypropylene PP, Polyvinyl chloride PVC, Polystyrene, Epoxy resin, Polyurethane resin, Acrylic resin, Phenolic resin, Organometallic compounds, Sulfur, Phosphoric acid, Polyphosphoric acid, Sulfonic acid, sulfuric acid, Carboxylic anhydrides or acid esters, Dibenzoyl peroxide, Silanes, Organic or inorganic sulfides, Urea, Organic amine and amides, recycled materials fibers (Crumb rubber, plastics, Lignin, Cellulose, Alumino-magnesium silicate, Glass fibers). It is desirable to focus on use of such types of recycled materials like lignin for bitumen modification.

Generally, lignin is obtained as a byproduct from paper manufacturing industry and can be extracted by Kraft process and the other source of a lignin component is from the 2G-bioethanol industry. In the 2G (second generation) bioethanol production process or the biomass refining process i.e. a ligno-cellulosic biomass comprising cellulose, hemicellulose and lignin may be converted to ethanol. The process commonly involves a hydrothermal pretreatment of the ligno-cellulosic biomass for making the cellulose accessible to catalysts in a subsequent step; followed by a hydrolysis of the cellulose for breaking down the cellulose to soluble carbohydrates and finally a fermentation of the soluble carbohydrates to ethanol. A fiber fraction and a liquid phase are left behind after the hydrolysis has been performed. The liquid phase obtained after the hydrolysis step comprises soluble carbohydrates useful for fermentation into ethanol. The remaining fraction obtained after the hydrolysis step comprises a lignin component. The fiber fraction consists mainly of lignin, cellulose, hemicellulose and ash components and termed it as "2G-Residue", as this lignin rich waste residue is derived from 2G-bioethanol process.

Around 580 Kg of waste 2G-Residue is generated in 2G-bioethanol production from 1 ton biomass and only 2% of this waste lignin residue (2G-Residue) has been utilized for value added products and rest is burnt in the plants for steam and power. Therefore, the cost of the residue is almost zero and does not add value to the bio-refinery plant. The high-energy density and intrinsic aromatic based structure of lignin make it possible to obtain various valuable materials from lignin such as polymer and aromatic rich pyrolysis oil. However, these product specific utilizations are highly expensive and limited in industrial activities due to low conversion. Hence, bulk use of the waste residue is desirable. Some prior arts regarding lignin modified bitumen are as follows:
US 6,737,443 B 1 relates to compositions and methods for combining black liquor with bitumen. This prior art also provides two separate processes for preparing lignin-based colloidal dispersions in lubricating or other petroleum-based oils. The lignin-oil colloidal dispersions prepared by either of such processes may be blended with bitumen to produce bituminous composition. The black liquor used in this prior art may be that resulting from cooking wood in an alkaline solution in the Soda or Sulfate (Kraft) paper-making process.

CN101724276B discloses a modified asphalt composition. The composition includes bitumen, lignin and a stabilizer. This prior art utilizes a compound having boiling point above 110 °C glycol ether or phenol as a stabilizer, an emulsifier further dispersed using lignin, lignin promote uniformity, stably dispersed in bitumen, it can significantly reduce the lignin in the asphalt sedimentation rate, improve the stability of the lignin modified asphalt, which is conducive to large-scale production of lignin modified asphalt.

CN 102070908A discloses a straw ethanol fermentation residue-containing modified asphalt composite material for a waterproof coiled material and a preparation method thereof. The composite material is prepared from the following raw materials in percentage by mass: asphalt, straw ethanol fermentation residue, rubber granules, filter, and polymer modification assistant. The preparation method comprises preheating asphalt to melt the asphalt; after the asphalt melts completely, slowing adding uniformly mixed straw ethanol fermentation residue and filter into the molten asphalt, and uniformly mixing; and adding rubber granules and uniformly mixing; after the rubber granules are molten completely, adding the polymer modification assistant, and uniformly mixing.

US 2017/0096.558 A1 is directed to a bitumen composition, to a paving, to roofing, to a method for preparing a bitumen composition, to a method for increasing the stiffness of a bitumen composition, to a method of adjusting the physical properties of a bitumen composition, and to the use of a bitumen composition. It comprises a lignin compound or derivative thereof, wherein 10 wt. % or more by weight of said lignin compound or derivative thereof is molecularly dissolved in said bitumen composition.

CN 103710040B discloses a kind of lignin modified asphalt, a preparation method and applications thereof. The modified asphalt is prepared after the following steps: first, lignin extraction is carried out; second, lignin refining is carried out; third, lignin modification is carried out; fourth, the modified lignin obtained from the third step and petroleum asphalt are placed in a reaction vessel, Na₂S is added, the reaction is for 30 min, and lignin modified asphalt is obtained after post processing. In the method, lignin is extracted from waste papermaking black liquid, asphalt is subjected to chemical modification by utilization of lignin after refining and modification, and lignin modified asphalt is obtained.

RU 2376275C1 relates to a method of recycling organochloride wastes from chemical production through their condensation in mild conditions in the presence of sodium polysulphide. It also relates to a modifying additive for bitumen, which is a product of condensation, whose components are: sodium sulphide, sulphur, sodium hydroxide, organochloride wastes, hydrolysed lignin which has been activated by mono- or multiple chlorination with chlorine water, which increased selectivity and efficiency of the process of bonding toxic organochloride compounds with lignin, obtaining a modifying additive for bitumen with high compatibility of lignin with bitumen.

CN101269934A provides an enzymolysis lignin or enzymolysis derivant modified asphalt composite material and a preparation method. The raw materials include the enzymolysis lignin or the enzymolysis lignin derivant, the asphalt and other modification assistant agents. The preparation steps: the enzymolysis lignin or the enzymolysis lignin derivant, other modification assistant agents and filling agent are mixed in advance to the melted asphalt substrate to be uniformly mixed, and then the mixture is displaced for solidification.

In most of the prior arts, lignin derived from paper industry is used for bitumen modification. The prior arts also do not discuss regarding the storage stability issues and elastic properties of lignin modified bitumen.

The present invention not only resolved the major issue regarding storage stability and elastic properties of modified bitumen but also reduce the cost as this invention utilizes different waste materials for bitumen modification by using bio-refinery wastes for better sustainability with circular economy. This invention also reduces the emission of CO₂ during the production of modified bitumen.

### OBJECTIVE OF THE INVENTION

One of the objectives of the present invention is to develop a 2G-bioethanol industry waste modified bitumen composition effective in mitigating one or more of the challenges in the state of the art.

Another objective of the present invention is to focus on bulk utilization of the waste lignin rich residue (2G-Residue) for bitumen modification.

### SUMMARY OF THE INVENTION

This summary is provided to introduce a selection of concepts, in a simplified format, that are further described in the detailed description of the invention. This summary is neither intended to identify key or essential inventive concepts of the invention and nor is it intended to determine the scope of the invention.

The present invention is at par with all required specification including physical properties of bitumen binder like penetration, softening point, elastic recovery, viscosity and storage stability. The present invention has passed all required rheological properties like high temperature performance (product is passed up to 82 °C) and low temperature performance (product is passed at -18 °C) of the binder as per AASHTO Specification. The present invention focused on the utilization of 2G-bioethanol industry waste lignin. More particularly, the present invention utilizes the employment of the 2G bioethanol industry waste (2G- Residue or 2G-Lignin) with high solid waste use (10-15%) in bitumen would contribute to sustainability with circular economy. This 2G-Residue will be valued without the need for subsequent transformations, or for leftover waste materials in order to obtain environmental, economic and social benefits like increased environmental friendliness, improved CO₂ footprint (less emission of CO₂ as 2G- Residue act as anti-oxidant in bitumen).

Accordingly, the present invention provides a 2G-bioethanol industry waste modified bitumen composition comprising:
(a) bitumen or asphalt binder or a petroleum vacuum residue;
(b) 2G-bioethanol industry waste lignin;
(c) an elasticity modifying agent; and
(d) a reactive component.

In one of the features of the present invention, the 2G-bioethanol industry waste modified bitumen composition comprising the bitumen or asphalt binder or a petroleum vacuum residue is in the range of 75-90 wt.% the 2G-bioethanol industry waste lignin is in the range of 1-20 wt.%, the elasticity modifying agent is in the range of 1-20 wt. %, and the reactive component is in the range of 0.01-5 wt.% with respect to total weight of the composition.

In another feature of the present invention, the bitumen or asphalt binder or petroleum vacuum residue is natural asphalt or petroleum asphalt or mixture thereof and bearing a penetration range from 50 to 150 dmm.

In yet another feature of the present invention, the 2G-bioethanol industry waste is obtained by a process for treatment of a ligno-cellulosic biomass, said process comprising:
(i) conducting pretreatment of the ligno-cellulosic biomass by hydrothermal pretreatment or acid/alkali pretreatment or steam explosion pretreatment method to obtain a pretreated ligno-cellulosic biomass;
(ii) hydrolysing the pretreated ligno-cellulosic biomass obtained in step (i) to obtain a liquid fraction comprising soluble carbohydrates, and a fiber fraction comprising a lignin component, wherein said hydrolysis is an acid catalyzed hydrolysis or enzymatic hydrolysis; and
(iii) fermenting the liquid fraction obtained in step (ii) to ferment said soluble carbohydrates to ethanol thereby obtaining a fermentation broth,
wherein the 2G-bioethanol industry waste lignin is isolated from the fiber fraction obtained in the step (ii) or step (iii).

In yet another feature of the present invention, the 2G-bioethanol industry waste lignin comprising lignin, cellulose, hemicellulose and ash component, and the 2G-bioethanol industry waste lignin is chemically modified with one or more reactive functional groups selected from nitro, amine, amide, halide, ether, epoxy and anhydride compounds.

In yet another feature of the present invention, the elasticity modifying agent comprises one or more of thermoplastic elastomer or rubber or any combination thereof.

In yet another feature of the present invention, the thermoplastic elastomer is selected from styrene butadiene elastomer (SBE), linear or radial styrene butadiene styrene (SBS), styrene butadiene rubber (SBR), styrene isoprene styrene (SIS), styrene ethylene butadiene styrene (SEBS), ethylene propylene diene terpolymer (EPDM), isobutene isoprene random copolymer (IIR), polyisobutene (PIB), polybutadiene (PBD), polyisoprene, or any combination thereof.

In yet another feature of the present invention, the rubber is selected from a natural rubber and a synthetic rubber, wherein:
(a) the natural rubber is latex; and
(b) the synthetic rubber is selected from recycled tire rubber, or crumb rubber, which is obtained from grinding of used truck tires or automobile tires, or from any other appropriate source of ground rubber.

In yet another feature of the present invention, the reactive component is selected from a dispersing agent, a preserving agent, an anti-foaming agent, a viscosity modifier, a reactive polymer, an amine or a polyamine or any combination thereof, wherein:
(i) the dispersing agent is selected from non-ionic dispersing agent, anionic dispersing agent, cationic dispersing agent, amphoteric dispersing agent, polypropylene-based polyether dispersions and any combination or compatible mixture thereof;
(ii) the preserving agent is selected from carboxylate, benzoate, benzoic acid derivative and the benzoic acid derivative is paraben, aldehyde, thiazine, organic acid, and any combination thereof;
(iii) the anti-foaming agent is selected from active silicone polymer, siloxane polymer, organo-modified siloxane, non-silicone compound, fatty acid or any combination thereof, wherein the fatty acid is selected from lauric acid, myristic acid, palmitic acid, stearic acid, arachidic acid, palmitoleic acid, oleic acid, erucic acid, linolenic acid, and mixtures thereof;
(iv) the viscosity modifier is one or more flux oil or Fischer-Tropsch waxes, and any combination thereof; and
(v) the reactive polymer is selected from random terpolymer of ethylene, acrylic ester and glycidyl methacrylate and maleic anhydride -grafted styrene - butadiene - styrene copolymer and any combination thereof.

In yet another feature of the present invention, the amine or polyamine is selected from an alkylene polyamine, piperazine, N-(2-aminoethyl) piperazine, 1,4-bis(2-aminoethyl) piperazine, aromatic polyamine, hydrazine and organo hydrazine, having hydrocarbon based substituents of up to about 30 carbon atoms, wherein:
(i) the alkylene polyamine is selected from ethylene diamine, diethylene triamine, triethylene tetramine, tetraethylene pentamine, pentaethylene hexamine, propylene diamine, trimethylene diamine, hexamethylene diamines, decamethylene diamine, octamethylene diamine, di(heptamethylene)triamine, tripropylene tetramine, tetraethylene pentamine, trimethylene diamine, pentaethylene hexamine, and di(trimethylene) triamine; and
(ii) the aromatic polyamine is selected from phenylene diamine and napthylene diamine.

The present invention also provides a process for preparation of a 2G-bioethanol industry waste modified bitumen composition comprising:
(a) heating a bitumen to a flow-able state temperature;
(b) adding a 2G-bioethanol industry waste lignin to step (a) and stirred it for 1-2 hours;
(c) adding an elasticity modifying agent to step (b) and stirred it for 1-2 hours; and
(d) adding one or more reactive component to step (c) and stirred it for 3-4 hours.

In one of the features of the present invention, the bitumen having penetration range of 50-150 dmm.

In yet another feature of the present invention, the bitumen in step (a) is heated to a temperature between 150-170 °C.

In yet another feature of the present invention, the 2G-bioethanol industry waste lignin is added to the heated bitumen in step (b) in concentration of 1-20 wt.%, the elasticity modifying agent is added to the heated bitumen mixture in step (c) in concentration of 1-20 wt.%, and the one or more reactive component is added to the heated bitumen mixture in step (d) in concentration of 0.01-5 wt.%.

In yet another feature of the present invention, the 2G-bioethanol industry waste lignin, elasticity modifying agent, and the reactive component are added to bitumen one by one or added simultaneously.

### BRIEF DESCRIPTION OF DRAWINGS

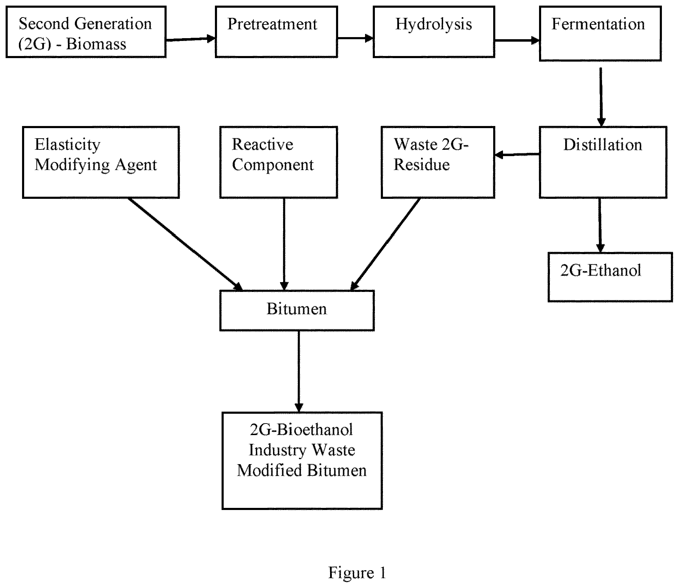

Figure 1 shows a schematic diagram of preparation of bio-ethanol industry waste modified bitumen.

### DETAILED DESCRIPTION OF THE INVENTION

For the purpose of promoting an understanding of the principles of the invention, reference will now be made to the embodiments in the specific language will be used to describe the same. It will nevertheless be understood that no limitation of the scope of the invention is thereby intended, such alterations and further modifications in the illustrated process, and such further applications of the principles of the invention as illustrated therein being contemplated as would normally occur to one skilled in the art to which the invention relates. Unless otherwise defined, all technical and scientific terms used herein have the same meaning as commonly understood by one of ordinary skilled in the art to which this invention belongs. The composition, methods, and examples provided herein are illustrative only and not intended to be limiting.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described. All publications mentioned herein are incorporated herein by reference. The terminology and structure employed herein is for describing, teaching, and illuminating some embodiments and their specific features and elements and does not limit, restrict, or reduce the spirit and scope of the invention.

The present invention focused on utilization of waste in bitumen modification with solving major issue regarding storage stability and elastic properties of modified bitumen. The present invention reduced the need for extra chemicals (such as plasticity modifying agents, reduced foaming, i.e. no need for anti - foaming agents, anti-stripping agents) with cost reduction (as waste 2G-Residue is generally very less expensive than any commercial additives). The present invention also increased life expectancy (longevity) of the bitumen compositions in road pavement, asphalt roofing, waterproofing, adhesives or any constructions comprising bitumen compositions as disclosed herein. The present invention improves the profitability of 2G bio-refinery by utilizing the low-cost waste generated after bioethanol production. With that, this invention will also boost circular economic model of lignin valorization. The advancement of the present invention over prior art are utilization of 2G bioethanol industry wastes (2G-Residue) with improved properties of bitumen including sustainability and circular economy. The prior arts have not disclosed the use of 2G bioethanol industry wastes (2G-Residue) as it is (without any purification) as a modifier or extender of bitumen modification.

The 2G bioethanol plant generate lignin rich residue (2G Residue) as a waste which is generally burnt as a waste management strategy and recover small amount of heat energy. The high-energy density and intrinsic aromatic based structure of lignin make it possible to obtain various valuable materials from lignin such as bio-polymer, carbon fiber, phenolic compounds, different oxidized product and aromatic rich pyrolysis oil etc. However, these product specific methods are very costly and limited in industrial activities due to low conversion. Hence, this invention focuses on bulk utilization of 2G residue for bitumen modification. The hydroxyl functional group and hydrocarbons present in lignin help to improve the performance properties of bitumen.

Accordingly, the present invention provides a 2G-bioethanol industry waste modified bitumen composition comprises bitumen, 2G-bioethanol industry waste, elasticity modifying agent(s) and a reactive component(s), used for sustainable developments. The invention also describes the process of preparation 2G-bioethanol industry waste blended bitumen to produce storage stable modified bitumen with improved performance.

The term bitumen or asphalt in the present invention may be natural bitumen or obtained from petroleum residue and bearing a penetration range from 50 to 150 dmm or may be mixture of natural and petroleum bitumen.

Generally, bitumen is composed of saturates, aromatics, resins and asphaltenes. Saturates are like oil which increases the liquid characteristics of the bitumen. They are generally straw or white in color with lowest molecular weight (like aromatics). Aromatics are mainly dark brown viscous liquid with low polarity and molecular weight range between 300 to 20,000. It plays like a dispersion medium for the asphaltenes and gives gum characteristics to the bitumen. Resins are normally black or brown solid with high polarity having molecular weight range between 500 to 50,000. Due to the high polarity of the resins, it is very adhesive in nature. The resins portion of the bitumen play like a peptizing agent for the asphaltenes and work as stabilizers, which can keep everything united in the bitumen. Asphaltenes are generally black or brown amorphous solids with highly polar having high molecular weight (between 1,000 and 100,000). There is a relation between molecular weight and size of the asphaltenes molecule i.e. higher the molecular weight, larger the molecules. The rheological properties of bitumen are strongly affected by asphaltenes content.

In general, the interaction of bitumen-rubber is not fully chemical in nature. This interaction occurred by two simultaneous processes: one is partial digestion of the crumb rubber in bitumen, and another is absorption of oils from the bitumen by network structure of rubber, to swell and soften. The degree of swelling of crumb rubber in bitumen depends upon the content of solvent (saturates or oily portion) in bitumen. So, for a better interaction between crumb rubber and bitumen, soft bitumen is required as it contains more saturates or oily components.

The term 2G-bioethanol industry waste in the present invention may be the waste collected after fermentation or hydrolysis process of 2G ethanol production from ligno-cellulosic biomass. The waste mainly consists of lignin, cellulose, hemicellulose and ash components and generally termed it as "2G-Residue or 2G-Lignin" as it is derived from 2G-bioethanol process. The waste 2G-Lignin may be chemically treated to form various chemically modified lignin.

The term elasticity modifying agent(s) in this invention may be one or more of thermoplastic elastomer(s) or rubber(s) or including any combination thereof.

In the present invention, the term thermoplastic elastomer is meant to comprise compounds such as styrene butadiene (SB), linear or radial styrene butadiene styrene (SBS), styrene butadiene rubber (SBR), styrene isoprene styrene (SIS), styrene ethylene butadiene styrene (SEBS), ethylene propylene diene terpolymer (EPDM), isobutene isoprene random copolymer (IIR), polyisobutene (PIB), polybutadiene (PBD), polyisoprene, or including any combination thereof.

The term rubber(s) relates a natural rubber, such as latex, or a synthetic rubber, such as recycled tire rubber or recycled crumb rubber. As this invention mainly focuses to develop modified bitumen utilizing different wastes, the term rubber(s) preferably relates to crumb rubber which is obtained from grinding of used truck tires or automobile tires, or from any other appropriate source of ground rubber.

Crumb rubber used in the present invention is advantageous. Elimination of waste, as crumb rubber is derived from waste tires which supports recycling and sustainability principles and improves the environment from less landfill. Higher resistance to deformation at increased road temperature, reduced degree of rutting, improves driving comforts even on higher axle loads. Crumb rubber bitumen has enhanced engineering properties with improved adhesion and bonding with aggregates which improves road safety. Higher softening point, high flow resistance and higher impact resistance, takes heavy vehicular traffic. Increased viscosity avoids bitumen softening and flushing onto the surface of the sprayed seal. Improved skid resistance, better road grip and smoother vehicle break application, which reduces chances of accident. Higher elongation and tensile strength which increases elasticity. Lesser thermal sensitivity which avoids all types of cracks under stress. High resistance to moisture/water absorption hence reduction to damage to roads during rains i.e. better anti-stripping properties. Improved durability through the ability to use higher binder film thickness in sprayed seals. Cost effective binder relative to other polymer modified bitumen, crumb rubber pricing is at par or below that of bitumen. Longer road pavement life and lesser maintenance.

The term reactive component(s) in the present invention relates to dispersing agent(s), preserving agent(s), anti-foaming agent(s), viscosity modifier(s), reactive polymer(s), amine or polyamine(s) or any combination thereof.

The dispersing agent is selected from the group comprising or consisting of non-ionic, anionic, cationic and amphoteric dispersing agent(s) and any combination or compatible mixture thereof.

The preserving agent is selected from the group comprising or consisting of one or more carboxylate, benzoate, benzoic acid derivative such as parabene(s), aldehyde(s), thiazine(s), organic acid(s) and the like, and any combination thereof.

The anti-foaming agent is selected from the group comprising or consisting of active silicone polymer(s), siloxane polymer(s), organo-modified siloxane(s), non-silicone compound(s) composition(s) comprising polypropylene-based polyether dispersions, fatty acid or any combination thereof. Fatty acid in the present invention comprises lauric acid, myristic acid, palmitic acid, stearic acid, arachidic acid, palmitoleic acid, oleic acid, erucic acid, linolenic acid, and mixtures of thereof.

The viscosity modifier(s) is one or more flux oil (aromatics, naphthenic, paraffinic) or Fischer-Tropsch waxes, including any combination thereof.

The reactive polymer(s) is selected from the group comprising or consisting of one or more random terpolymer of ethylene, acrylic ester, methacrylates, butyl acrylates, glycidyl methacrylate, glycidyl vinyl ether and maleic anhydride -grafted styrene - butadiene - styrene copolymer or any combination thereof.

Amine or Polyamine(s) comprises useful alkylene polyamine include ethylene diamine, diethylene triamine, triethylene tetramine, tetraethylene pentamine, pentaethylene hexamine, propylene diamine, trimethylene diamine, hexamethylene diamines, decamethylene diamine, octamethylene diamine, di(heptamethylene)triamine, tripropylene tetramine, tetraethylene pentamine, trimethylene diamine, pentaethylene hexamine, di(trimethylene) triamine, N-(2-aminoethyl) piperazine, 1,4-bis(2-aminoethyl) piperazine. The amino compound can also be an aromatic polyamines such as the phenylene and napthylene diamines or hydrazines such as hydrazine itself and organo hydrazine having hydrocarbon based substituents.

The main reason of bituminous road deterioration is the weakening or the detachment of the bitumen film adhering to the surface of the aggregate (stripping) in contact with water.

Stripping occurs when the bitumen binder has a greater internal cohesion than the adhesion with the aggregate, resulting in the detachment of the bitumen film from the aggregate. Instead, considering the chemical adhesion theory, the molecular interactions in the maltenes fraction of the bitumen have crucial importance.

The adhesion of bituminous binders involves physical properties of different origin. The adhesion is influenced by the characteristics of both the bitumen (hydrophobic material) and the aggregate used in the mixture (basically hydrophilic material). The bituminous binder creates a superficial film around the aggregate in order to obtain a hydrophobic surface.

The main theory of adhesion is chemical adhesion theory: charges of equal sign repel, therefore the aggregates (-ve charge) have compatibility problems with the bitumen (-ve charge, as bitumen contains acidic group) as their negative charge increases; molecular orientation theory: the contact between binder and aggregates is affected by the orientation of the bitumen molecules that are organized to satisfy the demand for energy of the aggregates, influencing the adhesion resistance. Better adhesion between aggregates and bitumen can be ensured through the usage of amine/polyamine based compound which converted bitumen with +ve charged can easily react with aggregate (-ve charge).

The amine/polyamine compounds have both polar (amine group) and non-polar (carbon chain) group which makes it a suitable component in bitumen modification. The non-polar group of amine has a very strong affinity towards bitumen whereas polar group has very strong reactivity with surface of aggregate. This molecular energy aligns or proper bonding between bitumen and aggregate improves adhesive property of the bitumen binder. The presence of amine/polyamine in bitumen not only improves the adhesive property but also improves the storage stability of the bitumen binder.

The present invention also discloses the process for production of storage stable industry waste modified bitumen using and 2G-bioethanol industry waste, elasticity modifying agent(s) and reactive component(s).

Several blends of bitumen with various compositions bio-ethanol industry waste, elasticity modifying agent(s) and reactive component(s) have been prepared to get storage stable bitumen with improved performance.

The process for incorporation of various components in bitumen to get highly storage stable 2G-bioethanol industry waste modified bitumen with improved properties comprises following steps:
a) Adding to heated bitumen or asphalt binder said 2G- bioethanol industry waste lignin (1-20) % and mixes it properly or disperses homogenously with the help of agitator for 1-2 hour.
b) Adding to heated 2G-bioethanol industry waste lignin blended bitumen said elasticity modifying agent (1-20) % and mixes it properly or disperses homogenously with the help of agitator for 1-2 hour.
c) Adding to above heated bitumen blend said reactive component (0.01-5) % and then mix it properly with the help of agitator for 2 to 4 hrs.

All the above said materials may be added to bitumen one by one or added simultaneously. The temperature should be maintained at 160 -170 °C throughout the process.

The following test methods were used to determine the physical, rheological and performance properties of storage stable 2G-bioethanol industry waste modified bitumen.

**Penetration; ASTM D5**: The penetration test measured the bitumen binder's consistency by means of an indentation test and was based on the ASTM D5 standard (Determination of needle penetration). The penetration value was measured by the distance in tenths of millimeters (0.1 mm or dmm) that a standard needle would penetrate vertically into a bitumen binder sample under standard test conditions (load 100g, time 5 second at 25 °C). Lower the value of penetration, harder the bitumen. Specimens are prepared in sample containers exactly as specified and placed in a water bath at the prescribed temperature of test for 1 to 1.5 hours before the test. Make at least three determinations on the specimen. A clean needle is used for each determination. In making repeat determinations, start each with the tip of the needle at least 10 mm from the side of the container and at least 10 mm apart.

**Softening Point; ASTM D36:** The softening point test was conducted to measure the temperature at which the bitumen softens i.e. indicative of the tendency of the material to flow at elevated temperatures encountered in service. Higher the value of softening point, harder the bitumen. This test method covers the determination of the softening point of bitumen in the range from 30 to 157 °C [86 to 315 °F] using the ring-and-ball apparatus immersed in distilled water [30 to 80 °C] or USP glycerin (above 80 to 157 °C). The values stated in either SI units or inch-pound units are to be regarded separately as standard. The values stated in each system may not be exact equivalents; therefore, each system shall be used independently of the other. Combining values from the two systems may result in non-conformance with the standard.

**Elastic Recovery; ASTM D6084:** This test method is useful in confirming that a material has been added to the asphalt to provide a significant elastomeric characteristic. It does not necessarily identify the type or amount of material added. This test method covers the elastic recovery of a bituminous material measured by the recoverable strain determined after severing an elongated briquette specimen of the material of the form described in. The specimens are pulled to a specified distance at a specified speed and at a specified temperature. Unless otherwise specified, the test shall be made at a temperature of 15 °C and with a speed of 5 cm/min.

**Rotational Viscosity; ASTM D4402**: This test method outlines a procedure for measuring the apparent viscosity of bitumen from 38 to 260 °C [100 to 500°F] using a rotational viscometer and a temperature-controlled thermal chamber for maintaining the test temperature. The standard used is ASTM D4402 (Standard Test Method for Viscosity Determination of Asphalt at Elevated Temperatures Using a Rotational Viscometer). A torque was applied to a spindle rotating in a special sample container containing the bitumen binder sample. The relative resistance of the spindle to rotation was determined, providing a measure of the bitumen binder viscosity.

**Storage Stability; ASTM D7173:** This is a method to check the separation of crumb rubber modified bitumen under storage. The samples are put in aluminum tubes heated at 163 ± 5 °C for 48 h without disturbance. At the end of the test period, samples were placed in the freezer for 4 h to solidify CRMB. After removing the tube from freezer, samples were cut into three equal length portions with the help of spatula and hammer. Top and bottom portion of the sample tube was kept separately and tested for their respective softening point test. The difference in softening points between the top and the bottom portion of the tube was measured. The maximum softening point differences between the top and the bottom portion are 4 °C could be considered with good storage stability according to IS 17079:2019.

**Dynamic Shear Rheometer (DSR); ASTM D7175:** The dynamic shear rheometer (DSR) is used to characterize the viscous and elastic behavior of bitumen binders at medium to high temperatures. This characterization is used in the Superpave performance grade (PG-grade) binder method and specification (AASHTO T 315 & AASHTO M 320). The basic DSR test uses a thin bitumen binder sample sandwiched between two circular plates. The lower plate is fixed while the upper plate oscillates back and forth across the sample at 10 rad/sec (1.59 Hz) to create a shearing action. DSR tests are conducted on un-aged, RTFO aged and PAV aged bitumen binder samples. The bitumen binders are visco-elastic. This means they behave partly like an elastic solid (deformation due to loading is recoverable - it is able to return to its original shape after a load is removed) and partly like a viscous liquid (deformation due to loading is non-recoverable - it cannot return to its original shape after a load is removed). The DSR is capable of quantifying both elastic and viscous properties. This makes it well suited for characterizing bitumen binders in the in-service pavement temperature range. The DSR measures a specimen's complex shear modulus (G*) and phase angle (δ). The complex shear modulus (G*) can be considered the sample's total resistance to deformation when repeatedly sheared, while the phase angle (δ), is the lag between the applied shear stress and the resulting shear strain. The larger the phase angle (δ), the more viscous the material. The specified DSR oscillation rate of 10 radians/second (1.59 Hz) is meant to simulate the shearing action corresponding to a traffic speed of about 55 mph (90 km/hr).

**Rolling Thin Film Oven (RTFO); ASTM D2872**: This short-term aging is analyzed by using the rolling thin-film oven (RTFO) method according AASHTO T-240 and ASTM D2872. The short-term aging was done to replicate the thermal stress on the bitumen during production and paving of the bituminous mix. The RTFO also provides a quantitative measure of the volatiles lost during the aging process. The basic RTFO procedure takes un-aged bitumen binder samples in cylindrical glass bottles and places these bottles in a rotating carriage within an oven. The carriage rotates within the oven at 163°C temperature ages the samples for 85 minutes. Samples are then stored for use in physical properties tests or in the PAV aging.

**Pressure Aging Vessel (PAV); ASTM D 6521:** The pressure ageing vessel (PAV) has been developed to simulate in-service ageing of asphalt binder after 5 to 10 years. The binder is exposed to high pressure and temperature for 20 hours to simulate the effect of long term oxidative ageing. This practice covers the accelerated aging (oxidation) of bitumen binders by means of pressurized air and elevated temperature. This is intended to simulate the changes in rheology which occur in bitumen binders during in-service oxidative aging but may not accurately simulate the relative rates of aging. It is normally intended for use with residue from Test Method D2872 (RTFOT), which is designed to simulate plant aging. The aging of bitumen binders during service is affected by ambient temperature and by mixture-associated variables, such as the volumetric proportions of the mix, the permeability of the mix, properties of the aggregates, and possibly other factors. This conditioning process is intended to provide an evaluation of the relative resistance of different bitumen binders to oxidative aging at selected elevated aging temperatures and pressures, but cannot account for mixture variables or provide the relative resistance to aging at in-service conditions.

**Multiple Stress Creep Recovery (MSCR); AASHTO TP70 and AASHTO MP19:** The multiple Stress Creep Recovery (MSCR) test is the latest improvement to the Superpave Performance Graded (PG) bitumen binder specification. The MSCR test uses the well-established creep and recovery test concept to evaluate the binder's potential for permanent deformation using the Dynamic Shear Rheometer (DSR), the same piece of equipment used today in the existing PG specification. A one-second creep load is applied to the bitumen binder sample. After the 1-second load is removed, the sample is allowed to recover for 9 seconds. The test is started with the application of a low stress (0.1 kPa) for 10 creep/recovery cycles then the stress in increased to 3.2 kPa and repeated for an additional 10 cycles. The percent recovery (R) shows the ability of the binder return to its initial state whiles the non-recoverable creep compliance (Jnr) refers to the non-recoverable strain of the binder after the initial load is taken. The deformation of the binder with time was also analyzed. R and Jnr provide a better understanding of the binders' resistance to permanent deformation at high temperatures, which is a well-known problem in pavements.

**Bending Beam Rheometer (BBR); ASTM D6648:** The low temperature performance of bitumen binder was evaluated by bending beam rheometer (BBR) test which measures two parameters namely the creep stiffness (S-value) and creep rate (m-value) of a binder at a low temperature. The m-value describes changes of bitumen stiffness under applied load whiles the S-value measures bitumen binder's ability to resist constant loading. The test was performed as per AASHTO T 315 test standards & AASHTO M 320 Specifications. According to this method, a sample of PAV aged bitumen binder is molded into a beam having dimensions of 6.25 x 12.5 x 127 mm and allowed to cool. The samples are then immersed in a controlled low-temperature fluid bath supported at two points. The load is applied at the midpoint of the beam to gage the creep stiffness (S) and the degree of modification of creep stiffness (m-value) at that particular temperature. These parameters are known to give a suggestion of the ability of a binder to contest low temperature cracking.

**Anti-Stripping (Hot Water Immersion Tests); ASTM D3625:** Boiling Water Test is a visual rating of the extent of stripping after the mixture is boiled. 238 grams of washed and dry aggregate and the 12 gm of melted bitumen is doped with the anti-stripping agent, mixed properly and are kept in oven at 85-100°C. Then a 2,000 ml beaker is filled halfway with distilled water and boiled. The mixture is placed in boiling water for 10 minutes. Asphalt cement that is floating is skimmed off from the top. The water is cooled to room temperature and then poured off. The aggregate mixture is emptied onto a white paper towel and graded, then visually observed for the remaining percentage of coated area (not stripped by water). After 24 hours the aggregate mixture is observed again.

The developed storage stable 2G-bioethanol industry waste modified bitumen in the present invention was evaluated for several physical and rheological properties by using various test method described above and it has been found that the developed product has good storage stability with improved physical and rheological properties.

In one embodiment, the present invention is directed to the interaction of elasticity modifying agent and reactive component with 2G-bioethanol industry waste to get storage stable modified bitumen. In another embodiment, the present invention is related to enhance the physical, rheological and performance properties of 2G-bioethanol industry waste modified bitumen. In another more embodiment, the present invention is directed to enhance the composition of 2G-bioethanol industry waste in bitumen to get cost effective; storage stable 2G-bioethanol industry waste modified bitumen with more environmental friendly and socio-economic benefits. In yet another embodiment, the present invention avoids the agitation process during the storage and transportation of modified bitumen.

### EXAMPLES

The present disclosure with reference to the accompanying examples describes the present invention. However, those of skill in the art should, in light of the present disclosure, appreciate that many changes can be made in the specific embodiments which are disclosed and still obtain a like or similar result without departing from the spirit and scope of the invention. It is understood that the examples are provided for the purpose of illustrating the invention only and are not intended to limit the scope of the invention in any way.

### Example-1: Effect on storage stability due to the addition of 2G-bioethanol industry waste (2G-Residue) in bitumen.

Neat bitumen was heated to a temperature range between 160 °C to 170 °C. Then about 10% 2G-bioethanol industry waste (2G-Residue) was added to it and then mix it homogenously with the help of agitator for 1-2 hours at a temperature range between 160 °C to 170 °C. The storage stability data (separation difference in softening point of top and bottom sample without sieving) is given in Table-1.

**Table-1**

| **S.N.** | **Bitumen (%)** | **2G Residue (%)** | Separation difference in softening point of top and bottom sample without sieving **(Storage Stability) in °C** |
|---|---|---|---|
| 1. | 90 | 10 | 8 |

### Example-2: Effect on storage stability due to the addition of crumb rubber in bitumen.

Neat bitumen was heated at a temperature range between 160 °C to 170 °C. Then the crumb rubber (derived from waste tires) was added and mixed with the help of stirrer for 1 to 2 hrs at a temperature range between 160 °C to about 170 °C. The test data for separation difference in softening point without sieving as shown in Table-2.

**Table-2**

| **S.N.** | **Bitumen (%)** | **Crumb Rubber (%)** | Separation difference in softening point of top and bottom sample without sieving **(Storage Stability) in °C** |
|---|---|---|---|
| 1. | 90 | 10 | 8 |

### Example-3: Effect on storage stability due to the addition of 2G-Residue along with crumb rubber in bitumen.

Neat bitumen was heated to a temperature range between 160 °C to 170 °C and 2G-Residue was added to heated bitumen for 1-2 hrs. Then crumb rubber was added to the resulting mixture and mixes them properly with the help of stirrer for 1 to 2 hrs. The test data for separation difference in softening point without sieving as shown in Table-3.

**Table-3**

| **S.N.** | **Bitumen (%)** | **2G-Residue (%)** | **Crumb Rubber (%)** | Separation difference in softening point of top and bottom sample without sieving **(Storage Stability) in °C** |
|---|---|---|---|---|
| 1. | 80 | 10 | 10 | 14 |

### Example-4: Effect on storage stability due to the addition of 2G-Residue, Crumb Rubber along with Reactive Component in Bitumen.

Neat bitumen was heated to a temperature range between 160 °C to 170 °C and then 2G-Residue was added in to it and mixed it properly for 1-2 hrs. Then crumb rubber was added to the bitumen mixture and mixed with the help of stirrer for 1 to 2 hrs and then reactive component was added to the mixture and mixed it properly for 2-4 hours at a temperature range between 160 °C to about 170 °C. The test data for separation difference in softening point without sieving as shown in Table-4.

**Table-4**

| **S.N.** | **Bitumen (%)** | **2G Residue (%)** | **Crumb Rubber (%)** | **Reactive Component (%)** | Difference in softening point of top and bottom sample without sieving **(Storage Stability) in °C** |
|---|---|---|---|---|---|
| **1.** | **79.5** | **10** | **10** | **0.5** | **01** |

According to IS 17079-2019 (Crumb Rubber Modified Bitumen-CRMB) Specification, the allowed separation difference between top and bottom sample should be maximum 4 °C. So, the present invention solved a major issue on modified bitumen i.e. the storage stability.

### Example-5: Effect on physical properties due to the addition of 2G-Residue, crumb rubber and reactive component in bitumen.

Various blends of bitumen with 2G-Residue, crumb rubber and reactive component have been prepared with above said process and optimized. Physicochemical properties of these prepared blends i.e. Neat Bitumen, 2G-Residue Modified Bitumen (2G-Bitumen), Crumb Rubber Modified Bitumen (CRMB), 2G Residue Modified CRMB (2G-CRMB) without reactive component and our developed 2G-CRMB with reactive component (2G-CRMBR) are given in Table-5.
**2G-Bitumen**: Neat Bitumen + 10% 2G Residue
**CRMB**: Neat Bitumen + 10% Crumb Rubber
**2G-CRMB**: Neat Bitumen + 10% 2G Residue + 10% Crumb Rubber
**2G-CRMBR**: Neat Bitumen + 10% 2G Residue + 10% Crumb Rubber + 0.5% Reactive Component

**Table-5**

| **Properties** | **CRMB-55 Spec.** | **Neat Bitumen** | **2G-Bitumen** | **CRMB** | **2G-CRMB** | **2G-CRMBR** |
|---|---|---|---|---|---|---|
| Penetration (dmm) | **60-30** | 86 | 72 | 57 | 44 | **48** |
| Softening Point (°C) | **Minimum 55** | 45 | 47 | 51 | 57 | **57** |
| Elastic Recovery (%) | **Minimum 60** | 15 | 15 | 60 | 65 | **70** |
| Viscosity at 150 °C (Poise) | **4-8** | 1.63 | 2.03 | 3.33 | 6.44 | **7.77** |
| Separation Difference (°C) | **Maximum 4** | 0.2 | 8 | 8 | 14 | **1** |

The physical properties of our developed 2G-CRMBR meet the specification (IS 17079-2019) of Crumb Rubber Modified Bitumen (CRMB-55).

### Example-6: Effect on rheological properties due to addition of 2G-Residue, crumb rubber and reactive component in bitumen.

### High Temperature Performance by DSR:

The high temperature performance properties of all prepared bitumen blends were determined in both before and after simulated aging in the Rolling Thin Film Oven (RTFO) to determine a minimum binder stiffness as exhibited in freshly paved roads up to one year in age and after the Pressure Aging Vessel (PAV) test to determine the maximum binder stiffness as exhibited in a pavement up to 5 or more years of age using Dynamic Shear Rheometer (DSR). The DSR data of un-aged, RTFO-aged (Table-6) and PAV-aged (Table-7) bitumen are given below. All the DSR testing of the prepared sample was performed on Anton Par MCR102 by using the method AASHTO T315-10.

**Table-6**

| **Sample** | **DSR (Un-aged) G*/Sinδ (kPa) value at different temp. (°C)** | | | | | **DSR (RTFO-Aged) G*/Sinδ (kPa) value at different temp. (°C)** | | | | |
|---|---|---|---|---|---|---|---|---|---|---|
| | **64** | **70** | **76** | **82** | **Pass temp.** | **64** | **70** | **76** | **82** | **Pass temp.** |
| **Neat Bitumen** | 1.30 | 0.64 | 0.31 | 0.15 | 64 | 3.31 | 1.59 | 0.82 | 0.43 | 64 |
| **2G-Bitumen** | 2.32 | 1.18 | 0.63 | 0.32 | 70 | 3.13 | 1.57 | 0.81 | 0.41 | 64 |
| **CRMB** | 4.03 | 2.12 | 1.18 | 0.68 | 76 | 5.98 | 3.29 | 1.84 | 0.89 | 70 |
| **2G-CRMB** | 6.01 | 3.36 | 1.90 | 1.11 | 82 | 12.20 | 6.68 | 3.91 | 2.30 | 82 |
| **2G-CRMBR** | 6.95 | 3.82 | 2.21 | 1.30 | 82 | 11.80 | 6.74 | 3.88 | 2.34 | 82 |

**Table-7**

| **Sample** | **DSR (PAV-aged) G*Sinδ (kPa) value at different temperature (°C)** | | | | | | | | |
|---|---|---|---|---|---|---|---|---|---|
| | **25** | **22** | **19** | **16** | **13** | **10** | **7** | **4** | **P/F (°C)** |
| **Neat Bitumen** | 1640 | 1920 | 2330 | 2880 | 3570 | 4440 | 5420 | - | 8.2 |
| **2G Bitumen** | 2160 | 2340 | 2670 | 2960 | 3380 | 3810 | 4260 | 5200 | 4.7 |
| **CRMB** | 850 | 1180 | 1660 | 2280 | 2970 | 3680 | 4490 | 5340 | 5.1 |
| **2G CRMB** | 1170 | 1530 | 1990 | 2500 | 3040 | 3530 | 4210 | 5010 | 4.0 |
| **2G CRMBR** | 1328 | 1660 | 2041 | 2538 | 3053 | 3722 | 4301 | 4890 | 3.7 |

According to AASHTO M320-10 specification, the acceptable value for G*/Sin6 (G*/Sinδ ≥ 1 kPa for un-aged binder & G*/Sinδ ≥ 2.2 kPa for RTFO-aged binder. The G*Sinδ value for PAV-aged binder should be less than 5000 kPa.

The G*/Sin6 value for un-aged binders i.e. Neat Bitumen, 2G-Bitumen and CRMB is passed at 64 °C, 70 °C and 76 °C while 2G-CRMB and 2G-CRMBR are passed at 82 °C.

The G*/Sin6 value for RTFO-aged binders i.e. Neat Bitumen, 2G-Bitumen, CRMB, 2G-CRMB and 2G-CRMBR are passed at 64 °C, 64 °C, 70 °C, 82 °C and 82 °C. This G*/Sinδ value for RTFO-aged binders show that use of 2G residue and crumb rubber in bitumen increases the rutting resistance of the binder.

The G*Sinδ value for PAV-aged binders i.e. Neat Bitumen, 2G-Bitumen, CRMB, 2G-CRMB and 2G-CRMBR are passed at 10 °C, 7 °C, 7 °C, 7 °C and 4 °C. Lower the passing temperature reflects the higher fatigue resistance of the binder. The G*Sin6 value for PAV-aged binders show that 2G-bioethanol industry waste (2G-Residue) doped CRMB improves the fatigue resistance of the binder.

### Low Temperature Performance by BBR:

Stiffness value and m-value of all the prepared blends were determined after RTFO and PAV aging as per ASTM D 6648 and AASHTO T313-10 test standards. The Bending Beam Creep Stiffness test measures low temperature stiffness characteristics. The test data for all the prepared blends are given below in Table-8.

**Table-8**

| **Sample** | **Stiffness (≤300 MPa) at different temp. (°C)** | | | **m-value (≥ 0.3) at different temp. (°C)** | | |
|---|---|---|---|---|---|---|
| | **-6** | **-12** | **-18** | **-6** | **-12** | **-18** |
| **Neat Bitumen** | 65 | 159 | 301 | 0.393 | 0.332 | 0.279 |
| **2G-Bitumen** | 71 | 156 | 286 | 0.389 | 0.342 | 0.303 |
| **CRMB** | 55 | 95 | 243 | 0.391 | 0.342 | 0.281 |
| **2G-CRMB** | 51 | 97 | 204 | 0.370 | 0.357 | 0.331 |
| **2G-CRMBR** | 53 | 103 | 212 | 0.395 | 0.377 | 0.355 |

The stiffness value of all binders i.e. Neat Bitumen, 2G-Bitumen, CRMB, 2G-CRMB and 2G- CRMBR at -18 °C were comes out to be 301, 286, 243, 204 and 212. According to AASHTO M 320-10 Specification, the required stiffness value for passing the sample should be less than 300 MPa. Thus, for stiffness value all binders are passed at -18 °C except neat bitumen.

The m-value for Neat Bitumen, 2G-Bitumen, CRMB, 2G-CRMB and 2G-CRMBR at -18 °C were found to be 0.279, 0.303, 0.281, 0.331 and 0.355. According to AASHTO M 320-10 Specification, the m-value should be more than 0.3 which is required to pass the sample. Thus, for m-value all binders are passed at -18 °C except neat bitumen and CRMB.

Our developed 2G-CRMBR was found to have best stiffness values and m-values at -18 °C as compared to rest other blends as well as neat bitumen and CRMB. It shows that addition of 2G-bioethanol industry waste (2G-Residue) in CRMB improves the low temperature thermal cracking resistance as compared to neat bitumen and CRMB.

### Multiple Stress Creep Recovery (MSCR) Test:

The MSCR test uses the well-established creep and recovery test concept to evaluate the binder's potential for permanent deformation. MSCR for all the prepared blends was determined as per AASHTO TP70 and AASHTO MP19 test method and specification. The MSCR test of all bitumen blends was carried out at 64 °C and the data's were given in Table-9. According to AASHTO MP19-10 Specification, there are four types of traffic grade like Standard Traffic (S-Grade), Heavy Traffic (H-Grade), Very Heavy Traffic (V-Grade) and Extremely Heavy Traffic (E-Grade) and the required conditions are as follows:
For S-Grade: Jnr value at 3.2 kPa (maximum **4.0** 1/kPa), Jnr difference maximum 75%
For H-Grade: Jnr value at 3.2 kPa (maximum **2.0** 1/kPa), Jnr difference maximum 75%
For V-Grade: Jnr value at 3.2 kPa (maximum **1.0** 1/kPa), Jnr difference maximum 75%
For E-Grade: Jnr value at 3.2 kPa (maximum **0.5** 1/kPa), Jnr difference maximum 75%

**Table-9**

| **Sample** | **Average Recovery (%)** | | **Non recoverable creep compliance, Jnr (1/kPa)** | | **Jnr Difference (%)** |
|---|---|---|---|---|---|
| | **0.1 kPa** | **3.2 kPa** | **0.1 kPa** | **3.2 kPa** | **AASHTO** |
| **Neat** | 3.13 | 0.49 | 2.94 | 3.27 | 11.27 |
| **2G-Bitumen** | 3.84 | 0.24 | 2.96 | 3.37 | 13.74 |
| **CRMB** | 39.78 | 17.18 | 0.81 | 1.25 | 53.43 |
| **2G-CRMB** | 47.65 | 33.61 | 0.29 | 0.38 | 29.63 |
| **2G-CRMBR** | 64.41 | 51.06 | 0.09 | 0.14 | 42.84 |

All the bitumen blends doped with 2G-Residue, crumb rubber and reactive component have higher average recovery in comparison to Neat Bitumen and CRMB at both 0.1 and 3.2 kPa stress level.

Non recoverable creep compliance (Jnr) values at 3.2 kPa for Neat Bitumen, 2G-Bitumen, CRMB, 2G-CRMB and 2G-CRMBR binder were comes out to be 3.27, 3.37, 1.25, 0.38 and 0.14 1/kPa. According to AASHTO MP19-10 Specification, the Jnr value at 3.2 kPa for Neat Bitumen and 2G Bitumen are acceptable for S-Grade while CRMB is acceptable for H-Grade and 2G-CRMB, 2G-CRMBR are acceptable for E-Grade i.e. for extremely heavy traffic.

Non recoverable creep compliance (Jnr) difference (%) for all the prepared blends were come out to be less than 75% which is required as per AASHTO MP19-10 specification. Average percentage recovery values of all modified bitumen were also found to be greater than neat bitumen at both 0.1 kPa and 3.2 kPa. All the test data obtained (Jnr, Jnr difference and % Recovery) from multiple stress creep recovery (MSCR) test shows that the 2G-bioethanol industry waste (2G-Residue) doped CRMB is the best for extremely heavy traffic road condition.

### Example-7: Effect on anti-stripping due to the addition of 2G-Residue, Crumb Rubber along with Reactive Component in Bitumen.

Anti-stripping was observed by standard test method (ASTM D 3625-12). The test data for the developed 2G-CRMBR is given in Table-10

**Table-10**

| **S.N.** | **Bitumen (%)** | **Crumb Rubber (%)** | **2G Residue (%)** | **Reactive Component (%)** | **Anti-stripping (%)** |
|---|---|---|---|---|---|
| 1. | 79.5 | 10 | 10 | 0.5 | 99 |

The anti-stripping value of any bitumen should be more than 95%. Our developed product shows 99% anti-stripping value i.e. our product has outstanding anti-stripping properties.

### Example-8: Experimental data reflecting criticality the range of 50-150 dmm

Different bitumen blends are prepared using crumb rubber (10%), 2G residue (10%) and reactive component (0.5%) with varying the penetration range of bitumen like <50 dmm, 50-150 dmm and >150 dmm. The physical properties are given in Table-11.

**Table-11: Experimental data reflecting criticality of the range of 50-150 dmm**

| Properties | Specification IS 17079:2019 (CRMB-55) | Hard Bitumen with Penetration Range <50 dmm | Soft Bitumen with Penetration Range 50-150 dmm | Very Soft Bitumen with Penetration Range >150 dmm |
|---|---|---|---|---|
| Penetration (dmm) | 60-30 | 33 | 51 | **73** |
| Softening Point (°C) | Minimum 55 | **60** | 57 | **53** |
| Elastic Recovery (%) | Minimum 60 | 63 | 67 | 62 |
| Viscosity at 150 °C (Poise) | 4-8 | **10.33** | 7.34 | 5.94 |
| Separation Difference | Maximum 4 | 1.3 | 1 | 1 |

The above data shows that soft bitumen with penetration range 50-150 dmm is passing as per the required specification. Hard bitumen with penetration range <50 dmm and very soft bitumen with penetration range >150 dmm is not passing as per the required specification.

### Example-9: Experimental data reflecting advantageous use of 2G-Bioethanol waste over other lignin feedstock

Different bitumen blends are prepared using crumb rubber (10%) and reactive component (0.5%) with varying lignin type i.e. 2G-Bioethanol waste (2G residue), Organosolv lignin and Alkali lignin. The physical properties of all bitumen blends are given in Table-12.

**Table-12: Experimental data reflecting advantageous use of 2G-Bioethanol waste over other lignin feedstock**

| Properties | Specification IS 17079:2019 (CRMB-55) | Bitumen with 2G Residue | Bitumen with Organosolv Lignin | Bitumen with Alkali Lignin |
|---|---|---|---|---|
| Penetration (dmm) | 60-30 | 51 | 49 | 57 |
| Softening Point (°C) | Minimum 55 | 57 | 57 | 56 |
| Elastic Recovery (%) | Minimum 60 | 67 | 66 | 65 |
| Viscosity at 150 °C (Poise) | 4-8 | 7.34 | 7.42 | 6.96 |
| Separation Difference | Maximum 4 | 1 | 1 | 1 |

The above data shows that the use of different lignin feedstock in bitumen along with crumb rubber and reactive component to prepare modified bitumen with improved properties. The physical properties of all developed products are passing as per required specifications. However, 2G residue modified bitumen is more cost effective and environment friendly in comparison to other lignin feedstock. Organosolv and alkali lignin are pure lignin, since it requires more chemicals, energy, time and other resources to purify it. 2G residue is a waste having cellulose (9-15%), hemicellulose (0.5-1%), Extractives (10-15%), ash (25-30%) and lignin (35-40%) which is more cost effective and environment friendly with waste to wealth approach.

### Example-10: Experimental data on sequential vs one-step simultaneous process

The process of developing product by sequential vs one-step simultaneous process is given in Table-13.

**Table-13: Experimental data on sequential vs one-step simultaneous process**

| Properties | Specification IS 17079:2019 (CRMB-55) | Product prepared by sequential process | Product prepared by one-step process |
|---|---|---|---|
| Penetration (dmm) | 60-30 | 48 | 51 |
| Softening Point (°C) | Minimum 55 | 57 | 57 |
| Elastic Recovery (%) | Minimum 60 | 70 | 67 |
| Viscosity at 150 °C (Poise) | 4-8 | 7.77 | 7.34 |
| Separation Difference | Maximum 4 | 1 | 1 |

The above data shows that all the physical properties of the developed product by sequential vs one-step process are nearly same and in both processes the product is passed as per required specification IS 17079:2019 (CRMB-55).

### Example-11: Experimental data on varying the amount (wt%) of components of the 2G-bioethanol industry waste modified bitumen composition:

In this invention, the range of wt% of each component of the different components / materials plays an important role to produce a specification meet product. The physical properties of bitumen blends with different wt% are given in Table-14.

**Table-14**

| **Properties** | **CRMB-55 Spec.** | **Ex. (I) 2G-CRMBR** | **Ex. (II) 2G CRMBR-2** | **Ex. (III) 2G CRMBR-3** | **Ex. (IV) 2G CRMBR-4** |
|---|---|---|---|---|---|
| Penetration (dmm) | **60-30** | **48** | 25 | 28 | 42 |
| Softening Point (°C) | **Minimum 55** | **57** | 64 | 62 | 58 |
| Elastic Recovery (%) | **Minimum 60** | **70** | 76 | 71 | 72 |
| Viscosity at 150 °C (Poise) | **4-8** | **7.77** | 18.56 | 13.88 | 11.62 |
| Separation Difference (°C) | **Maximum 4** | **1** | 8 | 7 | 1 |

| | | | | | |
|---|---|---|---|---|---|
| **2G CRMBR**: Bitumen (79.5 wt.%) + Crumb Rubber (10%) + 2G Residue (10%) + Reactive Component (0.5%) **2G CRMBR-2**: Bitumen (68.5%) + Crumb Rubber (21%) + 2G Residue (10%) + Reactive Component (0.5%) **2G CRMBR-3**: Bitumen (68.5%) + Crumb Rubber (10%) + 2G Residue (21%) + Reactive Component (0.5%) **2G CRMBR-4**: Bitumen (74%) + Crumb Rubber (10%) + 2G Residue (10%) + Reactive Component (6%) | | | | | |

The above data shows that by varying the wt% of each component outside the ranges as disclosed herein, product does not meet the required specifications. Thus, this indicated that all the components should be within the ranges disclosed herein for obtaining the desired result of the present disclosure. Any deviation in the weight percentages would not result in the desired 2G-bioethanol industry waste modified bitumen composition.

## Claims

1. A 2G-bioethanol industry waste modified bitumen composition comprising:
(a) bitumen or asphalt binder or a petroleum vacuum residue;
(b) 2G-bioethanol industry waste lignin;
(c) an elasticity modifying agent; and
(d) a reactive component.

2. The composition as claimed in claim 1, wherein the bitumen or asphalt binder or a petroleum vacuum residue is in the range of 75-90 wt.% the 2G-bioethanol industry waste lignin is in the range of 1-20 wt.%, the elasticity modifying agent is in the range of 1-20 wt. %, and the reactive component is in the range of 0.01-5 wt.% with respect to total weight of the composition.

3. The composition as claimed in claim 1 or 2, wherein the bitumen or asphalt binder or petroleum vacuum residue is natural asphalt or petroleum asphalt or mixture thereof and bearing a penetration range from 50 to 150 dmm.

4. The composition as claimed in claim 1 or 2, wherein the 2G-bioethanol industry waste is obtained by a process for treatment of a ligno-cellulosic biomass, said process comprising:
(i) conducting pretreatment of the ligno-cellulosic biomass by hydrothermal pretreatment or acid/alkali pretreatment or steam explosion pretreatment method to obtain a pretreated ligno-cellulosic biomass;
(ii) hydrolysing the pretreated ligno-cellulosic biomass obtained in step (i) to obtain a liquid fraction comprising soluble carbohydrates, and a fiber fraction comprising a lignin component, wherein said hydrolysis is an acid catalyzed hydrolysis or enzymatic hydrolysis; and
(iii) fermenting the liquid fraction obtained in step (ii) to ferment said soluble carbohydrates to ethanol thereby obtaining a fermentation broth,
wherein the 2G-bioethanol industry waste lignin is isolated from the fiber fraction obtained in the step (ii) or step (iii).

5. The composition as claimed in claims 1 to 4, wherein the 2G-bioethanol industry waste lignin comprising lignin, cellulose, hemicellulose and ash component, and the 2G-bioethanol industry waste lignin is chemically modified with one or more reactive functional groups selected from nitro, amine, amide, halide, ether, epoxy and anhydride compounds.

6. The composition as claimed in claims 1 to 5, wherein the elasticity modifying agent comprises one or more of thermoplastic elastomer or rubber or any combination thereof.

7. The composition as claimed in claim 6, wherein the thermoplastic elastomer is selected from styrene butadiene elastomer (SBE), linear or radial styrene butadiene styrene (SBS), styrene butadiene rubber (SBR), styrene isoprene styrene (SIS), styrene ethylene butadiene styrene (SEBS), ethylene propylene diene terpolymer (EPDM), isobutene isoprene random copolymer (IIR), polyisobutene (PIB), polybutadiene (PBD), polyisoprene, or any combination thereof.

8. The composition as claimed in claim 6, wherein the rubber is selected from a natural rubber and a synthetic rubber, wherein:
(a) the natural rubber is latex; and
(b) the synthetic rubber is selected from recycled tire rubber, or crumb rubber, which is obtained from grinding of used truck tires or automobile tires, or from any other appropriate source of ground rubber.

9. The composition as claimed in claim 1 or 2, wherein the reactive component is selected from a dispersing agent, a preserving agent, an anti-foaming agent, a viscosity modifier, a reactive polymer, an amine or a polyamine or any combination thereof, wherein:
(i) the dispersing agent is selected from non-ionic dispersing agent, anionic dispersing agent, cationic dispersing agent, amphoteric dispersing agent, polypropylene-based polyether dispersions and any combination or compatible mixture thereof;
(ii) the preserving agent is selected from carboxylate, benzoate, benzoic acid derivative and the benzoic acid derivative is paraben, aldehyde, thiazine, organic acid, and any combination thereof;
(iii) the anti-foaming agent is selected from active silicone polymer, siloxane polymer, organo-modified siloxane, non-silicone compound, fatty acid or any combination thereof, wherein the fatty acid is selected from lauric acid, myristic acid, palmitic acid, stearic acid, arachidic acid, palmitoleic acid, oleic acid, erucic acid, linolenic acid, and mixtures thereof;
(iv) the viscosity modifier is one or more flux oil or Fischer-Tropsch waxes, and any combination thereof; and
(v) the reactive polymer is selected from random terpolymer of ethylene, acrylic ester and glycidyl methacrylate and maleic anhydride -grafted styrene - butadiene - styrene copolymer and any combination thereof.

10. The composition as claimed in claim 9, wherein the amine or polyamine is selected from an alkylene polyamine, piperazine, N-(2-aminoethyl) piperazine, 1,4-bis(2-aminoethyl) piperazine, aromatic polyamine, hydrazine and organo hydrazine, having hydrocarbon based substituents of up to about 30 carbon atoms, wherein:
(i) the alkylene polyamine is selected from ethylene diamine, diethylene triamine, triethylene tetramine, tetraethylene pentamine, pentaethylene hexamine, propylene diamine, trimethylene diamine, hexamethylene diamines, decamethylene diamine, octamethylene diamine, di(heptamethylene)triamine, tripropylene tetramine, tetraethylene pentamine, trimethylene diamine, pentaethylene hexamine, and di(trimethylene) triamine; and
(ii) the aromatic polyamine is selected from phenylene diamine and napthylene diamine.

11. A process for preparation of a 2G-bioethanol industry waste modified bitumen composition comprising:
(a) heating a bitumen to a flow-able state temperature;
(b) adding a 2G-bioethanol industry waste lignin to step (a) and stirred it for 1-2 hours;
(c) adding an elasticity modifying agent to step (b) and stirred it for 1-2 hours; and
(d) adding one or more reactive component to step (c) and stirred it for 3-4 hours.

12. The process as claimed in claim 11, wherein the bitumen having penetration range of 50-150 dmm.

13. The process as claimed in claim 11, wherein the bitumen in step (a) is heated to a temperature between 150-170 °C.

14. The process as claimed in claim 11, wherein the 2G-bioethanol industry waste lignin is added to the heated bitumen in step (b) in concentration of 1-20 wt.%, the elasticity modifying agent is added to the heated bitumen mixture in step (c) in concentration of 1-20 wt.%, and the one or more reactive component is added to the heated bitumen mixture in step (d) in concentration of 0.01-5 wt.%.

15. The process as claimed in claim 12, wherein the 2G-bioethanol industry waste lignin, elasticity modifying agent, and the reactive component are added to bitumen one by one or added simultaneously.
